# EUROPÄISCHE PATENTSCHRIFT

(11) **EP 3 015 674 B1**
(45) Veröffentlichungstag und Bekanntmachung des Hinweises auf die Patenterteilung: **21.03.2018**
(21) Anmeldenummer: 15184380.2
(22) Anmeldetag: 09.09.2015
(51) Int. Cl.: F02B 29/04, F02G 5/00, B60H 1/32, F01P 3/22

(54) **AUFGELADENE BRENNKRAFTMASCHINE UND ZUGEHÖRIGES BETRIEBSVERFAHREN**
CHARGED COMBUSTION ENGINE AND CORRESPONDING OPERATING METHOD
MOTEUR À COMBUSTION INTERNE SURALIMENTÉ ET PROCÉDÉ DE FONCTIONNEMENT CORRESPONDANT

(30) Priorität: 01.10.2014 DE 102014219941
(43) Veröffentlichungstag der Anmeldung: 04.05.2016
(73) Patentinhaber: Mahle International GmbH, 70376 Stuttgart (DE)
(72) Erfinder: Dingelstadt, René, 70374 Stuttgart (DE); Nagel, Norman, 71640 Ludwigsburg (DE); NAUJOKS, Sascha, 76327 Pfinztal (DE); STRENG, Simon, 70327 Stuttgart (DE); WIESKE, Peter, 70825 Korntal-Münchingen (DE)
(74) Vertreter: BRP Renaud & Partner mbB Rechtsanwälte Patentanwälte Steuerberater

(56) Entgegenhaltungen:
- EP-A1- 2 020 316
- EP-A2- 1 342 893
- EP-B1- 1 089 891
- DE-A1- 19 859 129
- DE-A1- 19 914 443
- DE-A1-102010 061 525
- DE-A1-102012 011 227

## Beschreibung

Die vorliegende Erfindung betrifft eine aufgeladene Brennkraftmaschine, vorzugsweise in einem Fahrzeug, sowie ein Verfahren zum Betreiben einer solchen Brennkraftmaschine in einem Fahrzeug und ein solches Fahrzeug.

Zum Betreiben einer Brennkraftmaschine sind ein Brennstoff und Luft notwendig, die in wenigstens einem Brennraum der Brennkraftmaschine verbrannt werden. Zur Leistungssteigerung bzw. Bereitstellung höherer Lasten der Brennkraftmaschine ist es bekannt, die Brennkraftmaschine aufzuladen. Hierbei wird in einer Frischluftanlage zum Zuführen von Luft zur Brennkraftmaschine ein Verdichter vorgesehen, der Bestandteil eines Abgasturboladers sein kann. Der Verdichter verdichtet die der Brennkraftmaschine zuzuführende Luft und stellt der Brennkraftmaschine somit Ladeluft zur Verfügung. In Folge thermodynamischer Gesetzmäßigkeiten führt das Aufladen bzw. Verdichten zu einer Erwärmung der Ladeluft, die wiederum zu einer niedrigen Dichte der Luft führt.

Zur Erhöhung der Dichte der Luft bzw. zur Erhöhung eines Luftmassenstroms ist es wünschenswert, die Ladeluft vor dem Zuführen zur Brennkraftmaschine zu kühlen. Zu diesem Zweck ist es bekannt, einen Ladeluftkühlkreis vorzusehen, in dem ein Kühlmittel zirkuliert und der einen Ladeluftkühler zum Kühlen der Ladeluft sowie einen Kühlmittelkühler zum Kühlen des Kühlmittels aufweist. Insbesondere bei höheren Lasten bzw. Leistungen oder Leistungsanforderungen an die Brennkraftmaschine, beispielsweise in einer Beschleunigungsphase eines zugehörigen Fahrzeugs, führt eine möglichst starke Kühlung der Ladeluft zu einer weiteren Verbesserung der Leistung der Brennkraftmaschine sowie zur reduzierten Entstehung von Schadstoffen in den Abgasen der Brennkraftmaschine. Um diese Verbesserungen zu erreichen, ist also eine möglichst starke Kühlung der Ladeluft verlangt. Zur Realisierung einer weiteren Kühlung der Ladeluft kann ein Kältekreis herangezogen werden. Im Kältekreis zirkuliert ein Kältemittel, das von einem Kältekreiskompressor angetrieben wird und einen Verdampfer zum Verdampfen des Kältemittels und einen Kondensator zum kondensieren des Kältemittels durchströmt. Zur Nutzung der Kälteleistung des Kältekreises ist es grundsächlich möglich, den Verdampfer des Kältekreises fluidisch mit dem Ladeluftkühlkreis zu koppeln.

Aus der EP 1 342 893 A2 ist eine aufgeladene Brennkraftmaschine mit zwei Ladeluftkühlern bekannt, die in einem Ladeluftkühlkreis angeordnet sind, der ferner einen Kühlmittelkühler des im Ladeluftkühlkreis zirkulierenden Kühlmittels aufweist. Zudem ist ein Kältekreis vorgesehen, der vom Ladeluftkühlkreis fluidisch getrennt und über einen Wärmetauscher mit diesem thermisch gekoppelt ist.

Die DE 198 59 129 A1 zeigt eine Brennkraftmaschine mit einem Kältekreis und einem Ladeluftkühlkreis sowie einem Ladeluftkühler. Der Ladeluftkühler sowie ein Verdampfer des Kältekreises sind dabei beide im Ladeluftkühlkreis eingebunden.

Die EP 1 089 891 B1 zeigt eine aufgeladene Brennkraftmaschine mit zwei Ladeluftkühlern, wobei einer der Ladeluftkühler in einem Kältekreis und der andere Ladeluftkühler in einem Ladeluftkühlkreis eingebunden sind. Ein Verdampfer des Kältekreises ist über einen gemeinsamen Kühler mit einem in einer Abgasanlage eingebundenen Wärmetauscher verbunden.

Aus der DE 10 2010 061 525 A1 ist es bekannt, die Abgaswärme einer aufgeladenen Brennkraftmaschine über drei Kreisläuft zum Kühlen der Ladeluft über einen Ladeluftkühler zu verwenden.

Hierbei besteht insbesondere die Gefahr der Vermischung des Kältemittels mit der Ladeluft bzw. mit dem Kühlmittel, insbesondere bei Beschädigungen des Kältekreises bzw. des Kühlkreises. Die Vermischung des Kältemittels mit dem Kühlmittel bzw. der Luft kann zu Betriebsstörungen der Brennkraftmaschine und/oder des Kühlsystems führen. Kommt im Kältekreis oder im Ladeluftkühlkreis ein brennbares bzw. entzündbares Kühlmittel bzw. Kältemittel zum Einsatz, so besteht ferner die Gefahr einer Verbrennung bzw. Zündung, die einen erheblichen Sicherheitsnachteil darstellt. Zudem können bei der Vermischung des Kältemittels mit der Ladeluft bzw. dem Kühlmittel Reaktionsprodukte entstehen, die ebenfalls eine Gefahr darstellen.

Die vorliegende Erfindung beschäftigt sich daher mit dem Problem, für eine aufgeladene Brennkraftmaschine, vorzugsweise in einem Fahrzeug, sowie für ein solches Fahrzeug und ein zugehöriges Betriebsverfahren alternative oder zumindest andere Ausführungsformen anzugeben, die sich durch eine erhöhte Sicherheit und/oder eine verbesserte Effizienz auszeichnen.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung basiert auf dem Grundgedanken, bei einer Brennkraftmaschine mit einem Kältekreis, in dem ein Kältemittel zirkuliert, und einer Frischluftanlage zur Versorgung der Brennkraftmaschine mit Luft, eine wärmeübertragende Kopplung zwischen dem Kältekreis und der Frischluftanlage mit Hilfe eines eigens hierfür vorgesehenen Zwischenkreises zu realisieren, in dem im Vergleich zum im Kältekreis zirkulierenden Kältemittel ein Zwischenmedium zirkuliert. Hierdurch sind der Kältekreis und die Frischluftanlage wärmeübertragend miteinander gekoppelt. Ferner sind die Frischluftanlage und der Kältekreis fluidisch gänzlich separiert. In der Folge wird eine Vermischung des Kältemittels mit Luft, insbesondere Ladeluft, der Frischluftanlage verhindert oder eine entsprechende Gefahr zumindest erheblich reduziert. Somit ist die Sicherheit des Kühlsystems bzw. der Brennkraftmaschine oder eines zugehörigen Fahrzeugs erhöht. Dem Erfindungsgedanken entsprechend, weist der Kältekreis einen Kältekreiskompressor zum Antreiben des Kältemittels und einen Verdampfer zum Verdampfen des Kältemittels auf. Zum Verdichten bzw. Aufladen der der Brennkraftmaschine zuzuführenden Luft ist in der Frischluftanlage ein Verdichter vorgesehen, wobei die vom Verdichter verdichtete Luft oder Ladeluft durch einen ersten Ladeluftkühler in der Frischluftanlage gekühlt wird. Der Wärmeaustausch zwischen dem Kältekreis und der Frischluftanlage erfolgt über den ersten Verdampfer und den ersten Ladeluftkühler. Das heißt, dass der erste Verdampfer und der erste Ladeluftkühler im Zwischenkreis eingebunden sind, wobei der Zwischenkreis fluidisch vom Kältekreis und der Frischluftanlage getrennt ist. In anderen Worten, die Wärmeübertragung zwischen dem Kältekreis und der Frischluftanlage läuft über den Zwischenkreis bzw. über das Zwischenmedium. Der Kältekreis kühlt über den ersten Verdampfer den Zwischenkreis bzw. das Zwischenmedium, während der Zwischenkreis bzw. das Zwischenmedium über den ersten Ladeluftkühler die Ladeluft kühlt.

Der Kältekreis weist gewöhnlich zusätzlich zum ersten Verdampfer und dem Kältekreiskompressor einen Kondensator auf, der stromab des Kältemittelkompressors und stromauf des ersten Verdampfers angeordnet ist. Dabei dient der Kondensator dem Kondensieren des Kältemittels.

Gewöhnlich dient der Kältekreis auch der Kühlung eines anderen Systems. In einem Fahrzeug kann der Kältekreis beispielsweise dazu dienen, einen Innenraum des Fahrzeugs zu kühlen. Der Kältekreis kann also Bestandteil einer Klimaanlage des Fahrzeugs sein.

Zum Kühlen des anderen Systems kann prinzipiell der erste Verdampfer zum Einsatz kommen. Das heißt, dass der erste Verdampfer zum Kühlen der Ladeluft über den Zwischenkreis bzw. über den ersten Ladeluftkühler und zum Kühlen des anderen Systems, insbesondere in der Klimaanlage, eingesetzt werden kann. Vorstellbar ist es auch, für die Kühlung des anderen Systems im Kältekreis einen anderen Verdampfer, also einen zweiten Verdampfer vorzusehen. Somit ist es möglich, den ersten Verdampfer ausschließlich für die Kühlung der Ladeluft einzusetzen, was eine effizientere und/oder unabhängigere Kühlung der Ladeluft erlaubt.

Bevorzugt sind der erste Verdampfer und der zweite Verdampfer in unterschiedlichen Zweigen des Kältekreises angeordnet. Dementsprechend weist der Kältekreis einen ersten Zweig sowie einen vom ersten Zweig unterschiedlichen zweiten Zweig auf. Die Zweige können an einer gemeinsamen Abzweigstelle vom Kältekreis abzweigen. Bevorzugt zweigt der Kältekreis stromab des Kondensators in die beiden Zweige auf, die dann stromauf des Kondensators wieder zum Kältekreis ineinander münden. Dabei ist der erste Verdampfer im ersten Zweig angeordnet, während der zweite Verdampfer im zweiten Zweig angeordnet ist. In einer äquivalenten Betrachtungsweise kann der erste Zweig als den zweiten Zweig umgehender bezeichnet werden. Hierdurch ist es möglich, den ersten Verdampfer im ersten Zweig zum Kühlen der Ladeluft, insbesondere ausschließlich hierfür, einzusetzen, während der zweite Verdampfer für den anderen Verwendungszweck des Kältekreises, also beispielsweise dem Betrieb der Klimaanlage, zum Einsatz kommt. Dementsprechend kann der zweite Verdampfer als Hauptverdampfer bezeichnet werden, während der erste Verdampfer als Nebenverdampfer bezeichnet werden kann. Entsprechendes gilt für den ersten Zweig und den zweiten Zweig: Der erste Zweig kann als Nebenzweig des Kältekreises bezeichnet werden, während der zweite Zweig als Hauptzweig des Kältekreises bezeichnet werden kann. Das Versehen des Kältekreises mit zwei Zweigen und der Anordnung jeweils eines der Verdampfer in einem solchen zugehörigen Zweig erlaubt ein flexibles Betreiben des Kältekreises. Zudem sind die Kühlung der Ladeluft über den Zwischenkreis und die Kühlung des anderen Systems quasi voneinander getrennt, was weitere Betriebsvorteile zur Folge hat.

Vorteilhaft ist eine Aufteilung der Strömung des Kältemittels zwischen dem ersten Zweig und dem zweiten Zweig möglich. Dies ist bevorzugt mit Hilfe einer Kältekreisventileinrichtung realisiert, die derart ausgestaltet bzw. angeordnet ist, dass sie die Strömung des Kältemittels zwischen dem ersten Zweig und dem zweiten Zweig des Kältekreises aufteilt. Dabei ist die Kältekreisventileinrichtung insbesondere derart ausgestaltet, dass sie eine Strömung des Kältemittels ausschließlich durch den zweiten Zweig erlaubt. Dadurch ist es möglich, keine Kühlleistung des Kältekreises an den Zwischenkreis bzw. den ersten Ladeluftkühler abzugeben. Ferner ist es vorstellbar die Kältekreisventileinrichtung derart auszugestalten, dass eine ausschließliche Durchströmung des ersten Zweigs des Kältekreises möglich ist. Hierdurch ist es insbesondere möglich, die an den Zwischenkreis abgegebene Kühlleistung des Kältekreises zu erhöhen.

Die Kältekreisventileinrichtung ist vorteilhalft derart ausgestaltet, dass eine beliebige Aufteilung der Strömung des Kältemittels zwischen dem ersten Zweig und dem zweiten Zweig möglich ist. Dabei ist die Aufteilung der Strömung zwischen dem ersten Zweig und dem zweiten Zweig bevorzugt stufenartig und/oder kontinuierlich einstellbar.

Die Kältekreisventileinrichtung kann ein Ventil oder mehrere Ventile aufweisen, die an beliebiger Stelle im Kältekreis angeordnet sein können. Insbesondere kann die Kältekreisventileinrichtung wenigstens ein solches Ventil im ersten Zweig, im zweiten Zweig bzw. einer Abzweigstelle des Kältekreises, an dem der erste Zweig und der zweite Zweig abzweigen, aufweisen.

Zum Kühlen der Ladeluft ist erfindungsgemäß ferner ein Ladeluftkühlkreis vorgesehen, in dem ein Kühlmittel zirkuliert. Der Ladeluftkühlkreis weist einen zweiten Ladeluftkühler zum Kühlen der Ladeluft sowie einen Kühlmittelkühler zum Kühlen des Kühlmittels auf. Dabei ist der zweite Ladeluftkühler vorzugsweise stromauf des ersten Ladeluftkühlers in der Frischluftanlage angeordnet. Hierdurch

ist es insbesondere möglich, die Ladeluft unabhängig und/oder zusätzlich vom ersten Ladeluftkühler zu kühlen. Stellt der Kältekreis keine Kühlleistung zum Kühlen der Ladeluft zur Verfügung, so ist es durch den Ladeluftkühlkreis möglich, trotzdem eine Kühlung der Ladeluft zu erreichen. Der Ladeluftkühlkreis kann zum Antreiben des Kühlmittels einen zugehörigen Kompressor aufweisen, der nachfolgend als Kühlkreiskompressor bezeichnet wird. Hierbei sind der Zwischenkreis, der Ladeluftkühlkreis sowie der Kältekreis jeweils fluidisch voneinander getrennt.

Das Kühlmittel, das Kältemittel und das Zwischenmedium können jeweils unterschiedlich sein. Insbesondere kann das Kältemittel ein phasenwechselndes Kältemittel sein. Das Kühlmittel kann ein Niedertemperaturkühlmittel sein. Das Zwischenmedium kann ein Wasser-Glykol-Gemisch sein bzw. ein solches Gemisch aufweisen. Selbstverständlich ist es auch möglich, dass das Kühlmittel, das Kältemittel und das Zwischenmedium wenigstens teilweise identisch sind.

Bei bevorzugten Ausführungsformen sind der Kondensator des Kältekreises und der Kühlmittelkühler benachbart angeordnet. Die benachbarte Anordnung des Kondensators und des Kühlmittelkühlers ist dabei vorteilhaft derart ausgestaltet, dass der Kondensator und der Kühlmittelkühler gemeinsam durch eine Luftströmung gekühlt werden können. Insbesondere in einem zugehörigen Fahrzeug ist es somit möglich, den Kondensator und den Kühlmittelkühler durch einen Kühlluftstrom zu kühlen, der zumindest teilweise durch den Fahrtwind und/oder durch ein Gebläse erzeugt und/oder verstärkt wird. Dabei sind der Kondensator und der Kühlmittelkühler bevorzugt derart angeordnet, dass sie nacheinander vom Kühlluftstrom gekühlt werden. Dies kann beispielsweise durch eine im Wesentlichen parallele Anordnung des Kondensators und des Kühlmittelkühlers erreicht werden. Ferner ist die Anordnung vorteilhaft derart ausgestaltet, dass der Kondensator vordem Kühlmittelkühler vom Kühlluftstrom gekühlt wird.

In bestimmten Situationen, insbesondere bei bestimmten Betriebspunkten der Brennkraftmaschine und/oder des zugehörigen Fahrzeugs, ist es wünschenswert, die Ladeluft nicht oder möglichst wenig zu kühlen oder eine Kühlung der Ladeluft durch den Zwischenkreis und somit durch den ersten Ladeluftkühler zu reduzieren, insbesondere zu unterbinden. Hierzu weist die Frischluftanlage einen den ersten Ladeluftkühler umgehenden Bypass auf, sodass die Ladeluft bei Bedarf am ersten Ladeluftkühler vorbeigeführt werden kann. Zu diesen Situationen gehören beispielsweise Phasen mit geringer Last bzw. mit einer Grundlast der Brennkraftmaschine, in denen eine übermäßige Kühlung der Ladeluft dem Gesamtwirkungsgrad bzw. der Schadstoffemission der Brennkraftmaschine entgegenwirkt.

Bevorzugt weist die Frischluftanlage eine Frischluftventileinrichtung auf, welche die Strömung der Ladeluft durch den ersten Ladeluftkühler umgehenden Bypass und/oder durch den ersten Ladeluftkühler steuert. Somit kann der Ladeluftkühler bei Bedarf gänzlich umgangen werden. In diesen Situationen kann eine Kühlung der Ladeluft ausschließlich durch den zweiten Ladeluftkühler erfolgen, der dementsprechend als Hauptladeluftkühler bezeichnet werden kann Im Umkehrschluss kann der erste Ladeluftkühler als Nebenladeluftkühler bezeichnet werden.

Bevorzugt sind diejenigen Ausgestaltungen, bei denen die Frischluftventileinrichtung eine Dosierung der Strömung der Ladeluft zwischen dem Bypass und dem ersten Ladeluftkühler erlaubt. Besonderes vorteilhaft ist eine beliebige Dosierung bzw. Aufteilung möglich. Somit ist es möglich, die durch die Frischluftanlage strömende Ladeluft in beliebigen Teilmengen durch den Bypass strömen zu lassen. Insbesondere ist es hierdurch auch möglich, eine Strömung der Ladeluft durch den Bypass zu verhindern, so dass die Ladeluft gänzlich durch den ersten Ladeluftkühler strömt. Durch eine entsprechende Regelung der Frischluftventileinrichtung kann somit eine Kühlung der zur Brennkraftmaschine gelangenden Ladeluft variiert werden, da die durch den Bypass strömende Ladeluft nicht durch den ersten Ladeluftkühler gekühlt wird und stromab des ersten Ladeluftkühlers der gegebenenfalls vom ersten Ladeluftkühler gekühlten Ladeluft beigemischt wird.

Zum Zirkulieren des Zwischenmediums im Zwischenkreis kann eine Fördereinrichtung, insbesondere ein Zwischenkreiskompressor, vorgesehen sein. Besagte Fördereinrichtung kann dabei beliebig betrieben werden. Insbesondere ist vorstellbar, die Zwischenkreisfördereinrichtung konstant zu betreiben. Zur Variation des Wärmeaustausches zwischen dem ersten Ladeluftkühler und dem ersten Verdampfer kann jedoch die Leistung der Fördereinrichtung variiert werden. So kann eine stärkere Zirkulation des Zwischenmediums im Zwischenkreis zu einem stärkeren Wärmeaustausch zwischen dem ersten Ladeluftkühler und dem ersten Verdampfer führen. Auch hierdurch kann die Kühlung der Ladeluft durch den ersten Ladeluftkühler beeinflusst werden.

Grundsätzlich ist vorstellbar, die jeweiligen Kompressoren bzw. Fördereinrichtung des Kühlsystems durch die Brennkraftmaschine anzutreiben. Insbesondere kann vorgesehen sein, dass der Kältekreiskompressor mit der Brennkraftmaschine antriebsverbunden ist. Die Antriebsverbindung zwischen der Brennkraftmaschine und dem Kältekreiskompressor kann dabei regelbar und insbesondere lösbar ausgestaltet sein. Auf diese Weise ist es beispielsweise möglich, bei bestimmten Betriebsphasen der Brennkraftmaschine bzw. des zugehörigen Fahrzeugs, die Antriebsverbindung zwischen dem Kältekreiskompressor und der Brennkraftmaschine zu unterbrechen, um die gesamte Leistung der Brennkraftmaschine anderweitig zur Verfügung zu stellen. Eine solche Phase kann beispielsweise vorliegen, wenn eine Beschleunigung des zugehörigen Fahrzeugs erfolgen soll bzw. wenn die Last der Brennkraftmaschine erhöht wird. Dabei wird durch die Reduzierung bzw. Unterbrechung des Antriebs des Kältekreiskompressors die Strömung des Kältemittels im Kältekreis reduziert, insbesondere unterbrochen. Dementsprechend erfolgt eine Kühlung der Ladeluft mit Hilfe des ersten Ladeluftkühlers vorrangig durch die zuvor im Zwischenkreis bzw. Zwischenmedium gespeicherte Kälteleistung. Die Kälteleistung ist also insbesondere durch die Wärmeaufnahmeleistung des Zwischenkreises gegeben. Hier dienen also der Zwischenkreis bzw. das Zwischenmedium als Kältespeicher zum Kühlen der Ladeluft mittels des ersten Ladeluftkühlers.

Ein weiterer Aspekt der vorliegenden Erfindung liegt darin, bei einer solchen in einem Fahrzeug vorgesehen Brennkraftmaschine, eine Schubphase dafür zu nutzen, den Zwischenkreis bzw. das Zwischenmedium zu kühlen. Dies kann durch das Betreiben des Kältekreiskompressors mittels einer Schubleistung des Fahrzeugs realisiert werden. In einer Schubphase des Fahrzeugs wird das Fahrzeug nicht durch die Brennkraftmaschine angetrieben. Vielmehr kann in einer Schubphase die kinetische Energie des Fahrzeugs zum Antreiben der Brennkraftmaschine genutzt werden. Dies ist regelmäßig dann der Fall, wenn ein Fahrzeugführer des Fahrzeugs den Fuß vom Gaspedal nimmt bzw. die Beschleunigung des Fahrzeugs reduziert und/oder unterbricht. Eine solche Schubphase kann beispielsweise auch durch den Verbrauch kinetischer und/oder potentieller Energie des Fahrzeugs vorliegen.. Diese Kühlung kommt bevorzugt dafür zum Einsatz, eine verbesserte Kältespeicherung des Zwischenmediums bzw. Zwischenkreises zu erzielen. So kann der Zwischenkreis ohne aktive Kühlung für längere Phasen zur Kühlung der Ladeluft eingesetzt werden. Insbesondere kann eine Antriebsverbindung der Brennkraftmaschine mit dem Kältekreiskompressor für eine längere Dauer getrennt werden, ohne dass eine Kühlung der Ladeluft mittels des Zwischenkreises bzw. des ersten Ladeluftkühlers unterbrochen wird. Durch diese Lösung ist es also möglich, die Speicherung der Kälteenergie, die insbesondere als Kältepuffer zum Einsatz kommen kann, ohne zusätzlichen Kraftstoffverbrauch der Brennkraftmaschine zu realisieren.

Bevorzugt wird die Schubphase des Fahrzeugs dadurch zum Speichern der Kälteenergie genutzt, dass der Kältekreiskompressor in dieser Schubphase durch die Schubleistung des Fahrzeugs betrieben wird. Hierzu kann das Fahrzeug entsprechende Einrichtungen aufweisen, welche die Schubleistung des Fahrzeugs in den Antrieb des Kältekreiskompressors umsetzen. Vorstellbar ist beispielsweise ein direkter Antrieb, beispielsweise durch die Antriebsverbindung. Alternativ oder zusätzlich kann die Schubleistung zur Zwischenspeicherung von Energie eingesetzt werden, die dann bei Bedarf dem Kältekreiskompressor zugeführt wird. Eine entsprechende Einrichtung weist dann insbesondere einen Energiespeicher, beispielsweise einen Akkumulator auf.

Zudem ist es vorstellbar, eine Leistung des Kältekreiskompressors bzw. eine Kompressorleistung in einer Schubphase des Fahrzeugs zu erhöhen. Das heißt, dass die Schubleistung des Fahrzeugs zusätzlich zu einem verstärkten Antrieb des Kältekreiskompressors eingesetzt wird. Insbesondere ist es vorstellbar, den Kältekreiskompressor in einer solchen Schubphase durch die Brennkraftmaschine und die Schubleistung des Fahrzeugs zu betreiben. Hierdurch ist eine verbesserte Kühlung des Zwischenkreises bzw. des Zwischenmediums in einer solchen Schubphase möglich.

Das Speichern der Kälteenergie im Zwischenkreis erlaubt es, für eine gewisse Dauer, die insbesondere von der Menge des Zwischenmediums und/oder der an die Ladeluft abgegebene Kühlleistung, abhängt, das Kühlen der Ladeluft mittels des Zwischenkreises unabhängig von einem Antrieb des Kältekreiskompressors zu betreiben. Hierdurch ist es möglich, eine Leistung des Kältekreiskompressors in Beschleunigungsphasen des Fahrzeugs, in denen eine erhöhte Leistung der Brennkraftmaschine benötigt wird, zu reduzieren. Somit ist es möglich, die für den Antrieb des Kältekreiskompressors aufgewendete Leistung der Brennkraftmaschine zumindest teilweise anderweitig, beispielsweise zur Beschleunigung des zugehörigen Fahrzeugs, zur Verfügung zu stellen, ohne auf eine Kühlung der Ladeluft durch den Zwischenkreis bzw. den ersten Ladeluftkühler zu verzichten.

Insbesondere ist es möglich, die Leistung des Kältekreiskompressors in einer Beschleunigungsphase des Fahrzeugs gänzlich runterzufahren. Das heißt, dass der Kältekreiskompressor in einer Beschleunigungsphase des Fahrzeugs abgeschaltet werden kann. In diesen Phasen erfolgt eine Kühlung der Ladeluft durch den Zwischenkreis, solange der Zwischenkreis, insbesondere das Zwischenmedium, eine ausreichend niedrige Temperatur aufweist. Insbesondere erfolgt die Kühlung der Ladeluft so lange, bis der erste Ladeluftkühler eine niedrigere Temperatur aufweist, als die Ladeluft.

Es versteht sich, dass neben der Brennkraftmaschine und des zugehörigen Betriebsverfahrens auch ein Fahrzeug mit einer solchen aufgeladenen Brennkraftmaschine zum Umfang dieser Erfindung gehört. Dabei kann das Fahrzeug eine Steuereinrichtung aufweisen, die das Fahrzeug, insbesondere die Brennkraftmaschine, gemäß dem vorstehend beschriebenen Verfahren steuert.

Zudem können der Kältekreis und/oder der Kühlkreis und/oder der Zwischenkreis zu einem Kühlsystem für die Brennkraftmaschine gehören, das in einem solchen Fahrzeug vorgesehen sein kann.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen,

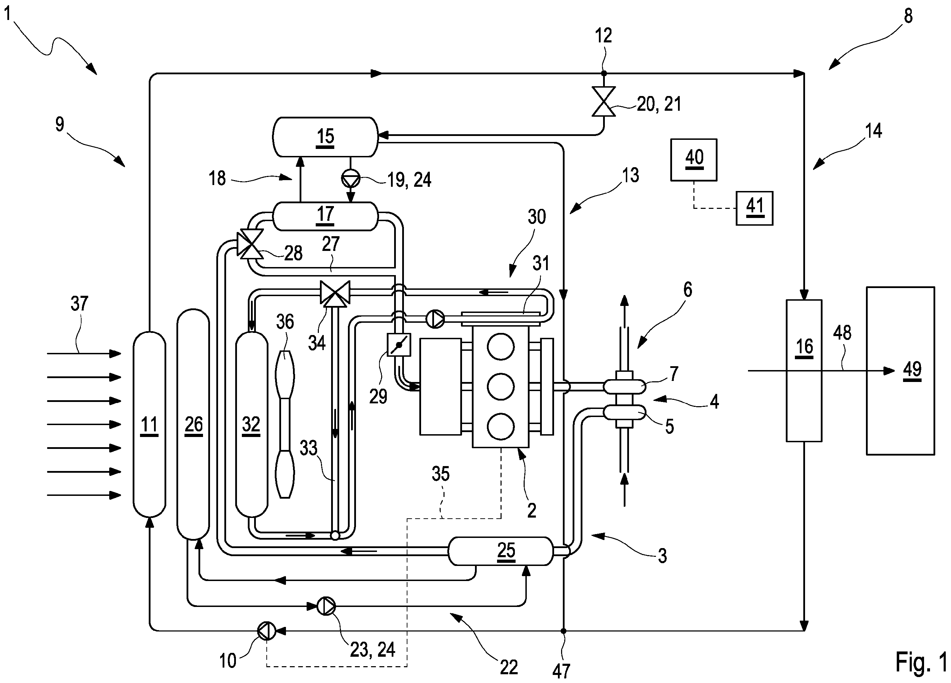

- Fig. 1 bis 5: jeweils eine schematisch, stark vereinfachte, schaltplanartige Darstellung eines Fahrzeugs, bei unterschiedlichen Ausführungsformen.

In Fig. 1 ist ein Fahrzeug 1 dargestellt, das eine Brennkraftmaschine 2 aufweist. Die Brennkraftmaschine 2 dient dem Antrieb des Fahrzeugs 1, wobei das Fahrzeug 1 zum Antrieb auch weitere, hier nicht gezeigte, Antriebsvorrichtungen aufweisen kann. Zum Betreiben der Brennkraftmaschine 2 ist Luft notwendig, die der Brennkraftmaschine 2 mit Hilfe einer Frischluftanlage 3 zugeführt wird. Dabei weist das Fahrzeug 1 einen Abgasturbolader 4 auf, dessen Verdichter 5 in der Frischluftanlage 3 angeordnet ist und die der Brennkraftmaschine 2 zuzuführende Luft verdichtet. Somit wird der Brennkraftmaschine 2 Ladeluft zugeführt. Das Fahrzeug 1 weist ferner eine Abgasanlage 6 auf, die das in der Brennkraftmaschine 2 entstandene Abgas abführt. In der Abgasanlage 6 ist eine Turbine 7 des Abgasturboladers 4 angeordnet, die den Verdichter 5 antreibt.

Durch das Verdichten der Luft erhöht sich die Temperatur der verdichteten Luft bzw. der Ladeluft. Dies wirkt jedoch einer Effizienz der Brennkraftmaschine 2, insbesondere in Leistungsphasen bzw. Lastphasen der Brennkraftmaschine 2, negativ entgegen.

Das Fahrzeug 1 weist ein Kühlsystem 8 auf, das die Frischluftanlage 3 sowie einen Kältekreis 9 umfasst. Im Kältekreis 9 zirkuliert ein Kältemittel, das von einem Kältekreiskompressor 10 des Kältekreises 9 angetrieben ist. Zudem weist der Kältekreis 9 stromab des Kältekreiskompressors 10 einen Kondensator 11 zum Kondensieren des Kältemittels auf. Stromab des Kondensators 11 weist der Kältekreis 9 eine Abzweigstelle 12 auf, von der ein erster Zweig 13 und ein zweiter Zweig 14 des Kältekreises 9 abzweigen. Der erste Zweig 13 und der zweite Zweig 14 münden stromauf des Kältemittelkompressors 10 und somit stromauf des Kondensators 11 in einer Einmündungsstelle 47zum Kältekreis 9 ineinander. Dabei ist im ersten Zweig 13 ein erster Verdampfer 15 des Kältekreises 9 angeordnet, während im zweiten Zweig 14 ein zweiter Verdampfer 16 des Kältekreises 9 angeordnet ist. Demnach fungiert der erste Zweig 13 als ein den zweiten Verdampfer 16 umgehender Bypass des Kältekreises 9.

Zum Kühlen der Ladeluft weist die Frischluftanlage 3 einen ersten Ladeluftkühler 17 auf, der stromab des Verdichters 5 in der Frischluftanlage 3 angeordnet ist. Das Kühlsystem 8 weist zudem einen Zwischenkreis 18 auf, in dem ein Zwischenmedium zirkuliert und der fluidisch vom Kältekreis 9 und der Frischluftanlage 3 getrennt ist. Der erste Verdampfer 15 sowie der erste Ladeluftkühler 17 sind ferner wärmeübertragend im Zwischenkreis 18 eingebunden. Das heißt, dass eine Wärmeübertragung zwischen dem ersten Ladeluftkühler 17 und dem ersten Verdampfer 15 mittels des Zwischenmediums erfolgt. Folglich werden jeweils fluidisch getrennt der erste Ladeluftkühler 17 vom Zwischenmedium und von der Ladeluft durchströmt, während und der erste Verdampfer 15 vom Kältemittel und von dem Zwischenmedium fluidisch getrennt durchströmt wird. Folglich sind auch der Kältekreis 9 und die Frischluftanlage 3 fluidisch gänzlich voneinander getrennt, derart dass eine Vermischung von Ladeluft und Kältemittel sowie zwischen Zwischenmedium und Kältemittel bzw. Kühlmittel unterbleibt. Zur Wärmeübertragung zwischen dem ersten Verdampfer 15 und dem ersten Ladeluftkühler 17 ist somit der Zwischenkreis 18 zwischengeschaltet, in dem das Zwischenmedium strömt. Zum Zirkulieren des Zwischenmediums im Zwischenkreis 18 ist eine Zwischenkreisfördereinrichtung 19 vorgesehen, die das Zwischenmedium antreibt.

Der Kältekreis 9 weist zum Aufteilen der Strömung des Kältemittels zwischen dem ersten Zweig 13 und dem zweiten Zweig 14 eine Ventileinrichtung 20 auf, die nachfolgend als Kältekreisventileinrichtung 20 bezeichnet wird. Die Kältekreisventileinrichtung 20 weist ein Ventil 21 auf, das im ersten Zweig 13 angeordnet ist. Durch Öffnen und Schließen des Ventils 21 kann somit die Strömung des Kältemittels durch den ersten Zweig 13 und folglich auch durch den zweiten Zweig 14 gesteuert werden. Insbesondere ist es somit möglich, eine Strömung des Kältemittels durch den ersten Zweig 13 zu unterbrechen. In diesem Fall erfolgt also keine aktive Kühlung des Zwischenmediums durch den ersten Verdampfer 15.

Das Kühlsystem 8 weist ferner einen Ladeluftkühlkreis 22 auf, in dem ein Kühlmittel zirkuliert. Zum Antreiben des Kühlmittels im Ladeluftkühlkreis 22 weist der Ladeluftkühlkreis 22 eine Fördereinrichtung 23 auf. Die Ladeluftkühlkreisfördereinrichtung 23 und die Zwischenkreisfördereinrichtung 19 können dabei jeweils als ein Kompressor 24 ausgestaltet sein. Der Ladeluftkühlkreis 22 weist des Weiteren einen zweiten Ladeluftkühler 25 zum Kühlen der Ladeluft sowie einen Kühlmittelkühler 26 zum Kühlen des Kühlmittels auf. Hierbei ist der Ladeluftkühlkreis 22 fluidisch vom Kältekreis 9 und vom Zwischenkreis 18 getrennt. Der zweite Ladeluftkühler 25 ist in der Frischluftanlage 3 stromab des Verdichters 5 und stromauf des ersten Ladeluftkühlers 17 angeordnet. Im gezeigten Beispiel ist der Ladeluftkühlkreis 22 ferner derart ausgestaltet, dass er eine permanente Kühlung der Ladeluft ermöglicht.

Die Frischluftanlage 3 weist einen Bypass 27 oder Frischluftanlagen-Bypass 27 auf, der den ersten Ladeluftkühler 17 umgeht. Hierdurch ist es möglich, die Ladeluft zumindest teilweise am ersten Ladeluftkühler 17 vorbeizuführen. Hierzu weist die Frischluftanlage 3 eine Frischluftventileinrichtung 28 auf, die eine Aufteilung der Strömung der Ladeluft durch den ersten Ladeluftkühler 17 und am ersten Ladeluftkühler 17 vorbei erlaubt. In der Folge kann eine Regulierung der Temperatur der Ladeluft dadurch erzielt werden, dass mit zunehmendem Anteil an durch den ersten Ladeluftkühler 17 strömender Ladeluft eine niedrigere Temperatur der zur Brennkraftmaschine 2 gelangenden Ladeluft erreicht wird. Zum Drosseln der zur Brennkraftmaschine 2 gelangenden Ladeluft ist ferner eine Drosseleinrichtung 29 vorgesehen, die stromab des ersten Ladeluftkühlers 17 in der Frischluftanlage 3 angeordnet ist.

Das Fahrzeug 1 weist ferner einen Motorkühlkreis 30 zum Kühlen der Brennkraftmaschine 2 auf. Im Motorkühlkreis 30 zirkuliert ein Motorkühlmittel durch einen Wärmetauscher 31 zum Kühlen des Motors und durch einen Motorkühlmittelkühler 32 zum Kühlen des Motorkühlmittels. Zudem weist der Motorkühlkreis 30 einen den Motorkühlmittelkühler 32 umgehenden Motorkühlkreisbypass 33 auf, sodass die Zirkulation des Motorkühlmittels mit Hilfe einer Motorkühlkreisventileinrichtung 34 am Motorkühlmittelkühler 32 vorbeigeführt werden kann. Somit kann eine Kühlung der Brennkraftmaschine 2, beispielsweise in einer Aufwärmphase der Brennkraftmaschine 2, ausgesetzt oder zumindest reduziert werden.

Bevorzugt sind Ausführungsformen, bei denen die Ladeluft mittels des ersten Ladeluftkühlers 17 auf eine niedrigere Temperatur gekühlt wird als mittels des zweiten Ladeluftkühlers 25.

Der Kältekreiskompressor 10 ist durch eine Antriebsverbindung 35 mit der Brennkraftmaschine 2 verbunden. Somit wird der Kältekreiskompressor 10 durch die Brennkraftmaschine 2 angetrieben. Bei bestimmten Anforderungen, insbesondere bei erhöhten Lasten bzw. einer Beschleunigungsphase des Fahrzeugs 1, wird die Antriebsverbindung 35 zwischen der Brennkraftmaschine 2 und dem Kältekreiskompressor 10 getrennt, sodass die gesamte Leistung der Brennkraftmaschine 2 für die erforderliche Last bzw. Beschleunigung zur Verfügung steht. In einer solchen Phase erfolgt die Kühlung der Ladeluft mit Hilfe des ersten Ladeluftkühlers 17 lediglich durch die Wärmeaufnahme des Zwischenmediums im Zwischenkreis 18 bzw. der im Zwischenkreis gespeicherten Kälte. Dabei ist eine Kühlung des Zwischenmediums durch den ersten Verdampfer 15 durch eine reduzierte oder unterbrochene Zirkulation des Kältemittels im Kältekreis 9 zumindest reduziert.

Das Fahrzeug 1 weist ein Gebläse 36 auf, das einen Kühlluftstrom 37 erzeugt, der durch einen Fahrtwind des Fahrzeugs 1 verstärkt werden kann. Der Kondensator 11 des Kältekreises 9, der Kühlmittelkühler 26 des Ladeluftkühlkreises 22 sowie der Motorkühlmittelkühler 32 des Motorkühlkreises 30 sind benachbart und parallel angeordnet, derart dass der Kühlluftstrom 37 den Kondensator 11, den Kühlmittelkühler 26 und den Motorkühlmittelkühler 32 nacheinander anströmt und/oder an diesen vorbeiströmt und somit kühlt.

Der Kältekreis 9 kann auch dazu eingesetzt werden, innerhalb des Fahrzeugs 1 eine andere Kühlung zu erreichen. Insbesondere kann der Kältekreis 9 für eine nicht weiter gezeigte Klimaanlage eingesetzt werden. Hierzu kommt der zweite Verdampfer 16 zum Einsatz, die beispielsweise eine Luftströmung 48 in einen hier nicht näher gezeigten Innenraum 49 des Fahrzeugs 1 kühlt.

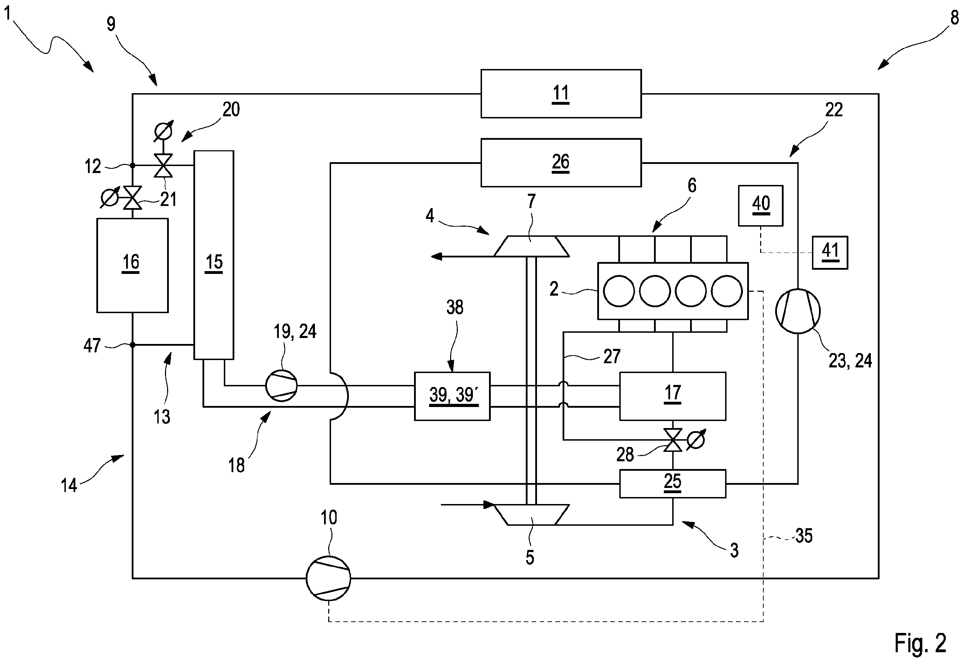

Fig. 2 zeigt ein anderes Ausführungsbeispiel des Fahrzeugs 1. Dabei ist der Motorkühlkreis 30 nicht dargestellt. Im Gegensatz zum in Fig. 1 gezeigten Ausführungsbeispiel weist die Kältekreisventileinrichtung 20 zwei Ventile 21 auf, wobei jeweils ein solches Ventil 21 im ersten Zweig 13 und im zweiten Zweig 14 angeordnet ist.

Der Zwischenkreis 18 weist eine thermische Masse auf, die in der Lage ist, Wärme auszutauschen. Zur thermischen Masse gehören also der erste Verdampfer 15, der erste Ladeluftkühler 17, das Zwischenmedium, die Zwischenkreisfördereinrichtung 19 sowie die Verbindungen zwischen diesen Bestandteilen.

Die thermische Masse hat einen Einfluss darauf, wie lange die Ladeluft durch den ersten Ladeluftkühler 17 im Falle einer Unterbrechung der Kühlung des Zwischenmediums durch den ersten Verdampfer 15, weiter gekühlt werden kann. Dementsprechend kann eine Abstimmung des Zwischenkreises 18, insbesondere durch eine entsprechende Wahl des Volumens, der Wärmeleitfähigkeit sowie der thermischen Speicherfähigkeit Einfluss auf besagte Dauer genommen werden, die eine vorgegebenen Zeit entspricht.

Bei dem in Fig. 2 gezeigten Beispiel ist eine thermische Speichereinrichtung 38 vorgesehen, die der zumindest teilweisen Bevorratung bzw. Speicherung von Zwischenmedium und/oder eines thermischen Zusatzspeichers 39 dient. Dabei kann der thermische Zusatzspeicher 39 oder kurz Zusatzspeicher 39 als Latentwärmespeicher 39' ausgestaltet sein oder Latentwärmespeicher 39' aufweisen. In diesem Beispiel sind der Speichereinrichtung 38 und somit der thermische Zusatzspeicher 39 bzw. der Latentwärmespeicher 39' kontinuierlich in den Zwischenkreis 18 eingebunden. Dies führt zu einer Vergrößerung der thermischen Masse des Zwischenkreises 18, sodass die Kühlung der Ladeluft durch den ersten Ladeluftkühler 17 ohne eine Kühlung des Zwischenkreises 18 für längere Zeit und/oder effizienter erfolgen kann. Besagte thermische Masse wird also durch den thermische Zusatzspeicher 39 vergrößert, um diese Vorteile zu erzielen.

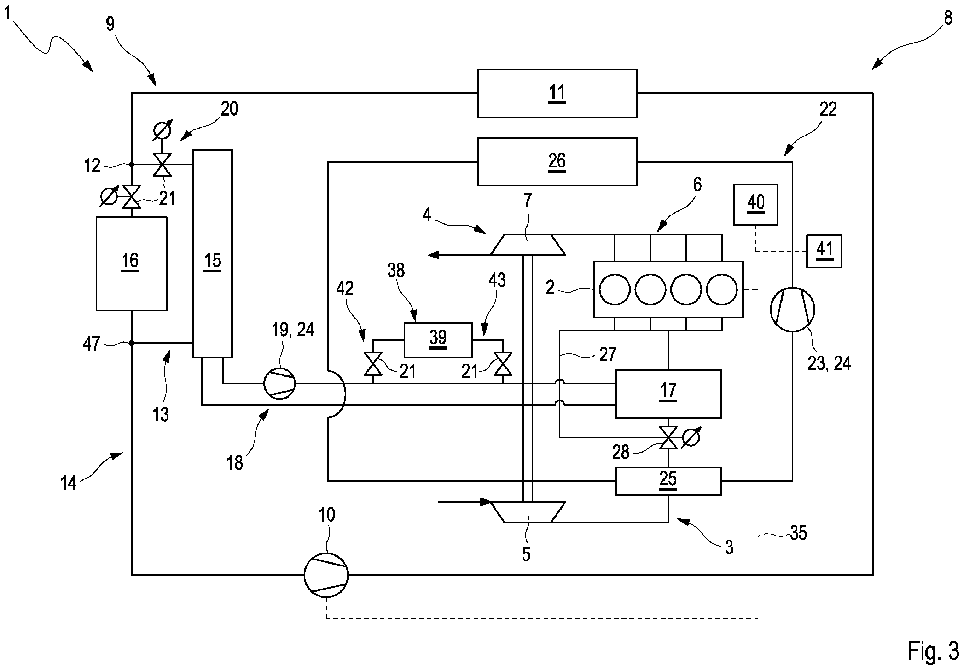

Vorstellbar ist es gemäß Fig. 3 auch, die Speichereinrichtung 38 nicht kontinuierlich in den Zwischenkreis 18 einzubinden. Hierzu ist die Speichereinrichtung38 mit Hilfe einer Zwischenkreisventileinrichtung 42 fluidisch und/oder thermisch mit dem Zwischenkreis 18 verbindbar. Dabei ist die Speichereinrichtung 38 in einem Zwischenkreisbypass 43 des Zwischenkreises 18 angeordnet. Die Zwischenkreisventileinrichtung 42 weist zwei Ventile 21 auf, wobei eines der Ventile 21 stromauf der Speichereinrichtung 38 und das andere Ventil 21 stromab der Speichereinrichtung 38 im Zwischenkreisbypass 43 angeordnet sind. Dadurch ist es möglich, den thermischen Zusatzspeicher 39 durch eine entsprechende Betätigung der Ventile 21 beliebig in den Zwischenkreis 18 einzubringen bzw. aus dem Zwischenkreis 18 abzuführen. In diesem Beispiel ist ferner vorgesehen das der thermische Zusatzspeicher 39 Zwischenmedium aufweist oder dem Zwischenmedium entspricht. Durch das Einbringen des Zusatzspeichers 39 wird also die thermisehe Masse des Zwischenkreises 18 vergrößert. Werden beide Ventile 21 der Zwischenkreisventileinrichtung 42 eröffnet, so wird thermischer Zusatzspeicher 39 in den Zwischenkreis 18 eingeführt. Werden beide Ventilen 21 die Zwischenkreisventileinrichtung 42 geschlossen, so sind die Speichereinrichtung 38 sowie der Zusatzspeicher 39 fluidisch und im Wesentlichen thermisch vom Zwischenkreis 18 getrennt. Beim Öffnen des stromauf angeordneten Ventils 21 der Zwischenkreisventileinrichtung 42 und schließen des stromab angeordneten Ventils 21 der Zwischenkreisventileinrichtung 42 wird thermischer Zusatzspeicher 39, insbesondere Zwischenmedium, aus dem Zwischenkreis 18 abgeführt und der Speichereinrichtung 38 gespeichert. Hierbei ist die Zwischenkreisventileinrichtung 42 vorteilhaft in geeigneter Weise, beispielsweise durch eine elektrische Leitung, mit der Steuereinrichtung 40 verbunden, sodass sie mit der Steuereinrichtung 40 kommunizieren und von der Steuereinrichtung 40 gesteuert werden kann. Die Steuereinrichtung 40 ist derart ausgestaltet, dass sie die fluidische und/oder thermische Verbindung zwischen der Speichereinrichtung 38 und dem Zwischenkreis 18 bei Bedarf, also beispielsweise wenn keine Kühlung des Zwischenkreises 18 und/oder eine unzureichende Kühlung der Ladeluft durch den ersten Ladeluftkühler 17 und/oder die Überschreitung einer vorgegebenen Temperatur des Zwischenmediums vorliegt, freigibt.

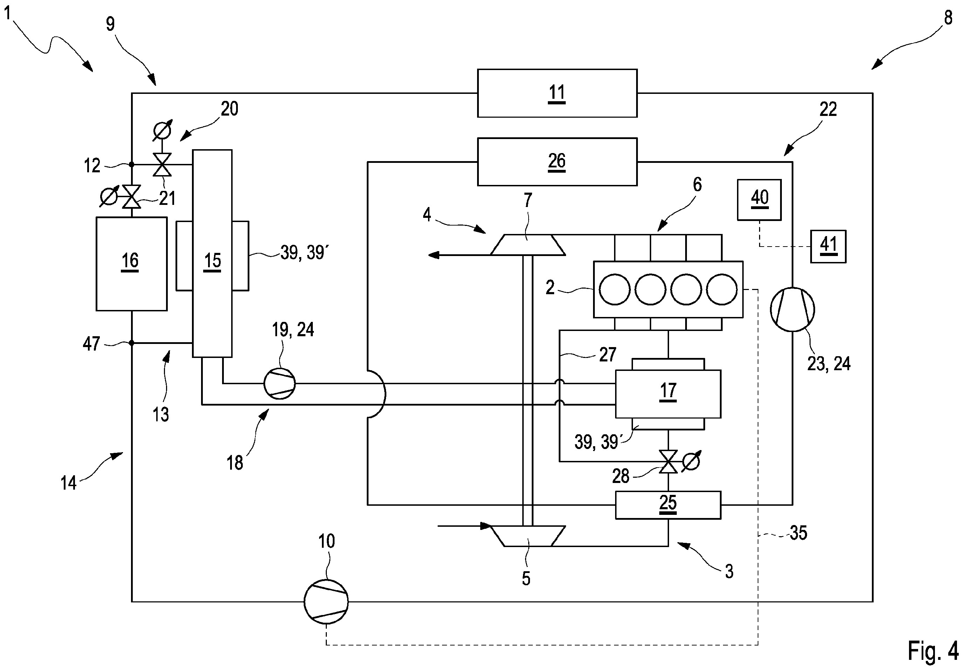

Fig. 4 zeigt eine Variante, bei der keine thermische Speichereinrichtung 38 vorgesehen ist. Bei dieser Variante ist der thermische Zusatzspeicher 39, insbesondere der Latentwärmespeicher 39', wenigstens teilweise am ersten Ladeluftkühler 17 angeordnet bzw. daran integriert. Hierdurch erfolgt bei Bedarf eine effektive Kühlung des ersten Ladeluftkühlers 17 und damit eine entsprechende effektive Kühlung der Ladeluft durch den ersten Ladeluftkühler 17.

Alternativ oder zusätzlich kann der thermische Zusatzspeicher 39, insbesondere der Latentwärmespeicher 39', zumindest teilweise am ersten Verdampfer 15 angeordnet bzw. daran integriert sein. Hierdurch ist insbesondere eine effektive Kühlung des ersten Verdampfers 15 und somit des Zwischenmediums bei Bedarf möglich.

Eine Aktivierung des thermischen Zusatzspeichers 39, bei der der Zusatzspeicher Wärme aufnimmt bzw. kühlt, kann auf beliebige Weise erfolgen. Eine solche Aktivierung kann, wie vorstehend erwähnt, das Verbinden der thermischen Speichereinrichtung 38 mit dem Zwischenkreis 18 sein. Beim Latentwärmespeicher 39' kann die Aktivierung einen Phasenübergang bewirken. Diese Aktivierung kann beispielsweise durch eine externe Betätigung erfolgen. Alternativ oder zusätzlich kann die Aktivierung bei der Überschreitung einer vorgegebenen Temperatur des Zwischenkreises 18, insbesondere des Zwischenmediums, automatisch ausgelöst werden.

Ein Aufladen des thermischen Zusatzspeichers 39, bei der der Zusatzspeicher 39 insbesondere Wärme abgibt bzw. Kälte speichert, erfolgt bevorzugt dann, wenn genügend Leistung hierfür zur Verfügung steht.

Das Fahrzeug 1 weist die Steuereinrichtung 40 auf, die das Fahrzeug 1, insbesondere das Kühlsystem 8 bzw. die Brennkraftmaschine 2 steuert. Hierzu ist die Steuereinrichtung 40 auf geeignete Weise, z.B. über elektrischen Leitungen, kommunizierend mit den Ventileinrichtungen 20, 28, 34, 42 verbunden. Zudem ist die Steuereinrichtung 40 auf geeignete Weise, insbesondere durch elektrische Leitungen, kommunizierend mit der Antriebsverbindung 35 zwischen der Brennkraftmaschine 2 und dem Kältekreiskompressor 10 verbunden. Die Steuereinrichtung 40 ist ferner mit Messeinrichtungen 41 des Fahrzeugs 1 bzw. des Kühlsystems 2 verbunden, die Betriebszustände bzw. zugehörige Betriebsparameter des Fahrzeugs 1 sowie des Kühlsystems 8 ermitteln. Hierzu gehören insbesondere Temperaturen des Fahrzeugs, der Ladeluft, der Brennkraftmaschine 2 sowie des Kühlsystems 8. Ist das Fahrzeug 1 in einer Schubphase, so wird keine Leistung durch die Brennkraftmaschine 2 zum Antrieb des Fahrzeugs 1 benötigt. In einer solchen Schubphase wird eine zugehörige Schubleistung des Fahrzeugs dazu verwendet, den Zwischenkreis 18 zu kühlen, sodass in anschließenden Phasen eine verbesserte Wärmeaufnahme des Zwischenkreises 18, insbesondere des Zwischenmediums und/oder des thermischen Zusatzspeichers 39, möglich ist. Insbesondere kann das Aufladen bzw. Kühlen des Zusatzspeichers 39 in einer solchen Schubphase erfolgen. Durch die Nutzung der Schubleistung kann also die Dauer verlängert werden, in der die Ladeluft durch den ersten Ladeluftkühler 17 gekühlt werden kann, ohne dass eine Kühlung des Zwischenkreises 18 bzw. des Zwischenmediums erfolgt. Die Kühlung des Zwischenkreises 18 in solchen Schubphasen erfolgt vorzugsweise dadurch, dass der Kältekreiskompressor 10 in einer solchen Schubphase des Fahrzeugs 1 durch die Schubleistung des Fahrzeugs 1 angetrieben wird. Hierdurch erfolgt das Kühlen des Zwischenkreises 18 ohne zusätzlichen Kraftstoffverbrauch der Brennkraftmaschine 2. Dabei kann eine Leistung des Kältemittelkompressors 10 bzw. eine Kompressorleistung in einer solchen Schubphase des Fahrzeugs 1 erhöht werden. Hierzu ist es vorstellbar, die Antriebsverbindung 35 zwischen der Brennkraftmaschine 2 und dem Kältekreiskompressor 10 zu verstärken. Auch kann die Schubleistung des Fahrzeugs 1 zusätzlich zum Antrieb durch die Brennkraftmaschine 2 herangezogen werden, um die Zirkulation bzw. einen Umsatz des Kältemittels im Kältemittelkreis 9 zu erhöhen, wodurch eine erhöhte Kühlleistung des ersten Verdampfers 15 erreicht wird.

Umgekehrt kann die Antriebsverbindung 35 zwischen dem Kältekreiskompressor 10 und der Brennkraftmaschine 2 unterbrochen werden, wenn eine erhöhte Leistung der Brennkraftmaschine 2 bzw. eine höhere Last der Brennkraftmaschine 2 erforderlich ist. Dies liegt insbesondere in einer Beschleunigungsphase des Fahrzeugs 1 vor, in der dann eine größere Leistung der Brennkraftmaschine 2 zur Beschleunigung zur Verfügung steht.

Ein erstmaliges Kühlen des Zwischenkreises 18, die eine Voraussetzung zur Kühlung der Ladeluft durch den ersten Ladeluftkühler 17 ist, erfolgt abhängig von Betriebsparametern des Fahrzeugs 1, des Kühlsystems 8 sowie der Brennkraftmaschine 2. Diese Betriebsparameter werden hierbei durch die Messeinrichtungen 41 ermittelt. Dabei kann insbesondere vorgesehen sein, dass der Zwischenkreis 18 erstmalig gekühlt wird, wenn die Brennkraftmaschine 2 für eine vorgegebene Zeit in einem Lastbetrieb betrieben wird. Bei einem solchen Lastbetrieb sind höhere Leistungen der Brennkraftmaschine 2 erforderlich, die ihrerseits eine stärke Kühlung der Ladeluft benötigen. Dementsprechend wird der Zwischenkreis 18 erstmalig gekühlt, wenn die Brennkraftmaschine 2 in einem solchen Lastbetrieb ist, bzw. für eine vorgegebene Zeit betrieben wird. Somit erfolgt also auch ein erstmaliges Kühlen der Ladeluft durch den ersten Ladeluftkühler 17, wenn die Brennkraftmaschine 2 erstmals in einem Lastbetrieb ist bzw. für eine vorgegebene Zeit in einem solchen Lastbetrieb betrieben wird.

Alternativ kann eine erstmalige Kühlung des Zwischenkreises 18 dann erfolgen, wenn ein Lastbetrieb der Brennkraftmaschine 2 zu erwarten ist. Dies kann beispielsweise der Fall sein, wenn eine Drehzahl der Brennkraftmaschine 2 einen positiven Gradienten aufweist. Dies ist ein Zeichen dafür, dass höhere Leistungen und somit Lasten der Brennkraftmaschine 2 zu erwarten sind bzw. gefordert werden, sodass eine stärkere Kühlung der Ladeluft benötigt wird. Diese stärkere Kühlung wird dabei durch den ersten Ladeluftkühler 17 bzw. den Zwischenkreis 18 zur Verfügung gestellt, der vom Kältekreis 9 gekühlt wird. Dementsprechend wird der Zwischenkreis 18 erstmalig gekühlt, wenn die Drehzahl einen solchen positiven Gradienten aufweist.

Bei einer weiteren Alternative erfolgt die erstmalige Kühlung des Zwischenkreises 18 nach einem Betriebsstart der Brennkraftmaschine 2 dann, wenn ein Lastbetrieb der Brennkraftmaschine signalisiert wird. Eine solche Signalisierung kann insbesondere durch die Einstellung eines zugehörigen Betriebsmodus, beispielsweise eines Sportmodus des Fahrzeugs 1, erfolgen. In diesem Fall ist also ein schnelles Ansprechverhalten der Brennkraftmaschine 2 auch unmittelbar nach dem Betriebsstart erwünscht, um insbesondere bessere Beschleunigungen des Fahrzeugs 1 zu erreichen. Dies erfordert eine ausreichende Kühlung der Ladeluft, die durch den ersten Ladeluftkühler 17 realisiert wird. Demnach erfolgt das erstmalige Kühlen des Zwischenkreises 18 durch den Kältekreis 9 bei der Auswahl bzw. Einstellung eines solchen Betriebsmodus. Dabei kann der Betriebsmodus auch vor dem Betriebsstart der Brennkraftmaschine 2 eingestellt sein, sodass eine erstmalige Kühlung des Zwischenkreises 18 unmittelbar nach dem Betriebsstart bzw. nach einer vorgegebenen Zeit nach dem Betriebsstart erfolgt.

Zur erstmaligen Kühlung des Zwischenkreises 18 wird der erste Zweig 13 vom Kältemittel durchströmt. Zur erstmaligen Kühlung des Zwischenkreises 18 kann demnach die Kältekreisventileinrichtung 20 zum Einsatz kommen, die zur erstmaligen Durchströmung des ersten Verdampfers 15 vom Kältemittel entsprechend gesteuert wird. Hierzu ist die Kältekreisventileinrichtung 20 auf beliebige Weise, beispielsweise durch elektrische Leiter, kommunizierend mit der Steuereinrichtung 40 verbunden, die an der Kältekreisventileinrichtung 20 eine entsprechende Einstellung vornimmt.

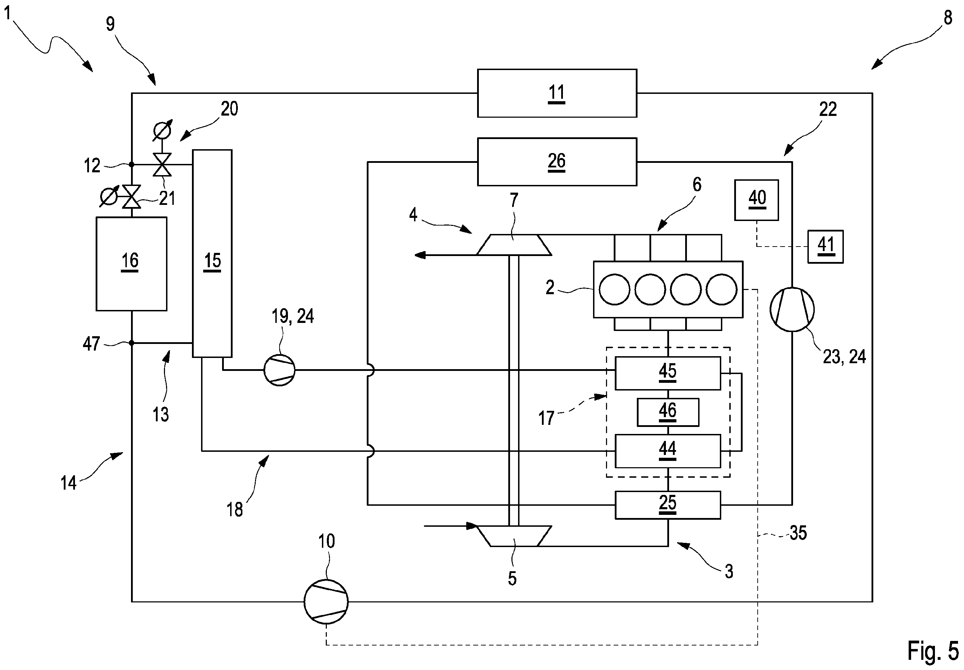

Fig. 5 zeigt ein anderes Ausführungsbeispiel des Fahrzeugs 1. Dieses Ausführungsbeispiel unterscheidet sich von dem in Fig. 2 gezeigten Ausführungsbeispiel insbesondere dadurch, dass keine Speichereinrichtung 38 und in der Frischluftanlage 3 und kein Bypass 27 zur Umgehung des ersten Ladeluftkühlers 17 vorgesehen sind. Zudem weist der erste Ladeluftkühler 17 eine erste Kühlstufe 44 und eine zweite Kühlstufe 45 auf. Die erste Kühlstufe 44 ist in der Frischluftanlage 3 vor der zweiten Kühlstufe 45, also stromauf der zweiten Kühlstufe 45 angeordnet. Im Zwischenkreis 18 ist die Anordnung umgekehrt: Die zweite Kühlstufe 45 ist stromauf der ersten Kühlstufe 44 angeordnet. Die Ladeluft wird im ersten Ladeluftkühler 17 also zunächst von der ersten Kühlstufe 44 und anschließend von der zweiten Kühlstufe 45 gekühlt, wobei durch die Anordnung der Kühlstufen 44, 45 im Zwischenkreis 18 die Ladeluft in der zweiten Kühlstufe 45 auf eine niedrigere Temperatur gekühlt wird als in der ersten Kühlstufe 44.

Der erste Ladeluftkühler 17 weist ferner einen Abscheider 46 auf, der in der Frischluftanlage 3 zwischen der ersten Kühlstufe 44 und der zweiten Kühlstufe 45 angeordnet ist. Der Abscheider 46 dient dem Zweck, Kondensat aus der Frischluftanlage 3, insbesondere der Ladeluft, abzuscheiden, das durch die Kühlung der Ladeluft entstehen kann. Hierdurch wird also verhindert, dass Kondensat, das insbesondere Wasser und/oder Öl aufweisen kann, in die Brennkraftmaschine 2 gelangt und dort Schäden verursacht.

Dabei wird das Kühlsystem 8 bevorzugt derart betrieben, dass durch die erste Kühlstufe 44 eine Kühlung der Ladeluft auf eine erste Temperatur erfolgt, die oberhalb von 0° C liegt. Damit ist insbesondere gewährleistet, dass keine Kristallisierung bzw. Vereisung des Kondensats eintritt. Anschließend erfolgt das Abscheiden des Kondensats im Abscheider 46, gefolgt von der Kühlung der Ladeluft in der zweiten Kühlstufe 45 auf eine zweite Temperatur, die geringer ist als die durch die Kühlung in der ersten Kühlstufe 44 erreichte, erste Temperatur. Bevorzugt erfolgt die Kühlung der Ladeluft sowie das Abscheiden des Kondensats derart, dass die Ladeluft nach der Kühlung in der ersten Kühlstufe 44 eine maximale relative Luftfeuchtigkeit, also 100 % relative Luftfeuchtigkeit, aufweist.

Hierdurch ist eine möglichst effiziente Kühlung der Ladeluft ohne Bildung von Kondensat gewährleistet.

Vorzugsweise wird dabei die Ladeluft in der zweiten Kühlstufe 45 auf eine Temperatur unterhalb von 0° C gekühlt. Das heißt, dass die zweite Temperatur unterhalb von 0° C liegt. Hierdurch können Kraftstoffersparnisse oder Schadstoffemissionsreduzierungen der Brennkraftmaschine 2 erzielt werden.

Das Betreiben der Brennkraftmaschine 2 erfolgt vorzugsweise mittels der Steuereinrichtung 40, die derart ausgestaltet ist, dass sie die Bestandteile des Fahrzeugs 1 steuern und betreiben kann.

Die Integration der ersten Kühlstufe 44 und der zweiten Kühlstufe 45 im ersten Ladeluftkühler 17 führt zu einer Verringerung des benötigten Bauraums. Entsprechendes gilt für die Integration des Abscheiders 46 im ersten Ladeluftkühler 17. Hierdurch können ferner die Anzahl der benötigten Bauteile zur Herstellung des Kühlsystems 8 reduziert werden. Des Weiteren wird die Effizienz der Kühlung der Ladeluft und des Abscheidens von Kondensat erhöht, da Energieverluste verringert werden.

## Patentansprüche

1. Aufgeladene Brennkraftmaschine (2), vorzugsweise in einem Fahrzeug (1),
- mit einem Kältekreis (9), in dem ein Kältemittel zirkuliert und der einen Kältekreiskompressor (10) zum Antreiben des Kältemittels und einen ersten Verdampfer (15) zum Verdampfen des Kältemittels aufweist,
- mit einer Frischluftanlage (3) zum Zuführen von Frischluft zur Brennkraftmaschine (2), in der ein Verdichter (5) angeordnet ist,
- wobei die Frischluftanlage (3) einen ersten Ladeluftkühler (17) zum Kühlen der von dem Verdichter (5) erzeugten Ladeluft aufweist,
- mit einem fluidisch vom Kältekreis (9) und der Frischluftanlage (3) getrennten Ladeluftkühlkreis (22), in dem ein Kühlmittel zirkuliert und der einen in der Frischluftanlage (3) stromauf des ersten Ladeluftkühlers (17) angeordneten zweiten Ladeluftkühler (25) zum Kühlen der Ladeluft und einen Kühlmittelkühler (26) zum Kühlen des Kühlmittels aufweist,
**dadurch gekennzeichnet,**
- **dass** die Brennkraftmaschine (2) einen Zwischenkreis (18) aufweist, in dem ein Zwischenmedium zirkuliert und in den der erste Verdampfer (15) und der erste Ladeluftkühler (17) wärmeübertragend eingebunden sind,
- **dass** der Zwischenkreis (18) fluidisch vom Kältekreis (9), dem Ladeluftkühlkreis (22) und der Frischluftanlage (3) getrennt ist.

2. Brennkraftmaschine (2) nach Anspruch 1,
**dadurch gekennzeichnet,**
- **dass** der Kältekreis (9) einen ersten Zweig (13) und einen zweiten Zweig (14) aufweist, die an einer stromab eines Kondensators (11) des Kältekreises (9) angeordneten gemeinsamen Abzweigstelle (12) abzweigen und an einer stromauf des Kondensators (11) angeordneten gemeinsamen Einmündungsstelle (47) zusammengeführt sind,
- **dass** der erste Verdampfer (15) im ersten Zweig (13) angeordnet ist,
- **dass** im zweiten Zweig (14) ein zweiter Verdampfer (16) angeordnet ist.

3. Brennkraftmaschine nach Anspruch 2,
**gekennzeichnet durch**,
eine Kältekreisventileinrichtung (20) zum Aufteilen der Strömung des Kältemittels zwischen dem ersten Zweig (13) und dem zweiten Zweig (14).

4. Brennkraftmaschine nach Anspruch 2 oder 3,
**dadurch gekennzeichnet,**
**dass** der Kondensator (11) und der Kühlmittelkühler (26) benachbart angeordnet sind und von einer gemeinsamen Kühlluftströmung (37) nacheinander durchströmbar und/oder umströmbar sind.

5. Brennkraftmaschine nach einem der Ansprüche 1 bis 4,
**dadurch gekennzeichnet,**
**dass** die Frischluftanlage (3) einen den ersten Ladeluftkühler (17) umgehenden Bypass (27) aufweist.

6. Brennkraftmaschine nach Anspruch 5,
**gekennzeichnet durch**,
eine Frischluftanlageventileinrichtung (28) zur Steuerung der Strömung der Ladeluft durch den Bypass (27) und/oder durch den ersten Ladeluftkühler (17).

7. Brennkraftmaschine nach einem der Ansprüche 1 bis 6,
**dadurch gekennzeichnet,**
**dass** der Zwischenkreis (18) eine Fördereinrichtung (19), insbesondere einen Zwischenkreiskompressor (24), zum Antreiben des Zwischenmediums aufweist.

8. Brennkraftmaschine nach einem der Ansprüche 1 bis 7,
**dadurch gekennzeichnet,**
**dass** die Brennkraftmaschine (2) zum Antreiben des Kältekreiskompressors (10) durch eine Antriebsverbindung (35) mit dem Kältekreiskompressor (10) verbunden ist.

9. Verfahren zum Betreiben eines Fahrzeugs (1) mit einer aufgeladenen Brennkraftmaschine (2) nach einem der Ansprüche 1 bis 8, wobei
- das Fahrzeug (1) von der Brennkraftmaschine (2) angetrieben wird,
- der Kältekreiskompressor (10) in einer Schubphase des Fahrzeug (1) mittels einer Schubleistung des Fahrzeugs (1) betrieben wird.

10. Verfahren nach Anspruch 9,
**dadurch gekennzeichnet,**
**dass** eine Kompressorleistung des Kältekreiskompressors (10) in einer Schubphase des Fahrzeugs (1) erhöht wird.

11. Verfahren nach Anspruch 9 oder 10,
**dadurch gekennzeichnet,**
**dass** die Leistung des Kältekreiskompressors (10) in einer Beschleunigungsphase des Fahrzeugs reduziert wird.

12. Verfahren nach Anspruch 11,
**dadurch gekennzeichnet,**
**dass** der Kältekreiskompressor (10) in einer Beschleunigungsphase des Fahrzeugs (1) abgeschaltet wird.

13. Fahrzeug (1) mit einer aufgeladenen Brennkraftmaschine (2) nach einem der Ansprüche 1 bis 8.

14. Fahrzeug nach Anspruch 13,
**dadurch gekennzeichnet,**
**dass** das Fahrzeug (1) eine Steuereinrichtung (40) aufweist, die derart ausgestaltet ist, dass sie das Fahrzeug (1) nach einem Verfahren gemäß einem der Ansprüche 9 bis 12 betreibt.

## Claims

1. Charged internal combustion engine (2), preferably in a vehicle (1),
- having a refrigerating circuit (9) in which a refrigerating agent circulates and which has a refrigerating circuit compressor (10) for driving the refrigerating agent and a first evaporator (15) for evaporating the refrigerating agent,
- having a fresh air installation (3) which is for supplying fresh air to the internal combustion engine (2) and in which a compressor (5) is arranged,
- wherein the fresh air installation (3) has a first charge air cooler (17) for cooling the charge air produced by the compressor (5),
- having a charge air cooling circuit (22) which is separated in fluid terms from the refrigerating circuit (9) and the fresh air installation (3) and in which a cooling agent circulates and which has a second charge air cooler (25) which is arranged in the fresh air installation (3) upstream of the first charge air cooler (17) for cooling the charge air and a cooling agent cooler (26) for cooling the cooling agent,
**characterised in that**
- the internal combustion engine (2) has an intermediate circuit (18) in which an intermediate medium circulates and in which the first evaporator (15) and the first charge air cooler (17) are integrated so as to transmit heat,
- **in that** the intermediate circuit (18) is separated in fluid terms from the refrigerating circuit (9), the charge air cooling circuit (22) and the fresh air installation (3).

2. Internal combustion engine (2) according to claim 1,
**characterised in that**
- the refrigerating circuit (9) has a first branch (13) and a second branch (14) which branch at a common branching location (12) which is arranged downstream of a condenser (11) of the refrigerating circuit (9) and which merge at a common confluence location (47) which is arranged upstream of the condenser (11),
- **in that** the first evaporator (15) is arranged in the first branch (13),
- **in that** a second evaporator (16) is arranged in the second branch (14).

3. Internal combustion engine according to claim 2,
**characterised by**
a refrigerating circuit valve device (20) for dividing the flow of the refrigerating agent between the first branch (13) and the second branch (14).

4. Internal combustion engine according to claim 2 or 3,
**characterised in that**
the condenser (11) and the cooling agent cooler (26) are arranged beside each other and a common cooling air flow (37) can flow through and/or flow around them one after the other.

5. Internal combustion engine according to any one of claims 1 to 4,
**characterised in that**
the fresh air installation (3) has a bypass (27) which bypasses the first charge air cooler (17).

6. Internal combustion engine according to claim 5,
**characterised by**
a fresh air installation valve device (28) for controlling the flow of the charge air through the bypass (27) and/or through the first charge air cooler (17).

7. Internal combustion engine according to any one of claims 1 to 6,
**characterised in that**
the intermediate circuit (18) has a conveying device (19), in particular an intermediate circuit compressor (24), for driving the intermediate medium.

8. Internal combustion engine according to any one of claims 1 to 7,
**characterised in that**
the internal combustion engine (2) is connected to the refrigerating circuit compressor (10) by means of a drive connection (35) for driving the refrigerating circuit compressor (10).

9. Method for operating a vehicle (1) having a charged internal combustion engine (2) according to any one of claims 1 to 8, wherein
- the vehicle (1) is driven by the internal combustion engine (2),
- the refrigerating circuit compressor (10) is operated in a thrust phase of the vehicle (1) by means of a thrust of the vehicle (1).

10. Method according to claim 9,
**characterised in that**
a compressor power of the refrigerating circuit compressor (10) is increased in a thrust phase of the vehicle (1).

11. Method according to claim 9 or 10,
**characterised in that**
the power of the refrigerating circuit compressor (10) is reduced in an acceleration phase of the vehicle.

12. Method according to claim 11,
**characterised in that**
the refrigerating circuit compressor (10) is switched off in an acceleration phase of the vehicle (1).

13. Vehicle (1) having a charged internal combustion engine (2) according to any one of claims 1 to 8.

14. Vehicle according to claim 13,
**characterised in that**
the vehicle (1) has a control device (40) which is constructed in such a manner that it operates the vehicle (1) in accordance with a method according to any one of claims 9 to 12.

## Revendications

1. Moteur à combustion interne suralimenté (2), de préférence dans un véhicule (1),
- avec un circuit de réfrigération (9) dans lequel un moyen de réfrigération circule et qui présente un compresseur de circuit de réfrigération (10) pour l'entraînement du moyen de réfrigération et un premier évaporateur (15) pour l'évaporation du moyen de réfrigération,
- avec une installation d'air frais (3) pour alimenter en l'air frais le moteur à combustion interne (2) dans laquelle un compresseur (5) est agencé,
- dans lequel l'installation d'air frais (3) présente un premier refroidisseur d'air de suralimentation (17) pour le refroidissement de l'air de suralimentation généré par le compresseur (5),
- avec un circuit de refroidissement d'air de suralimentation (22) séparé fluidiquement du circuit de réfrigération (9) et de l'installation d'air frais (3), dans lequel un moyen de refroidissement circule et qui présente un second refroidisseur d'air de suralimentation (25) agencé dans l'installation d'air frais (3) en amont du premier refroidisseur d'air de suralimentation (17) pour le refroidissement de l'air de suralimentation et un refroidisseur de moyen de refroidissement (26) pour le refroidissement du moyen de refroidissement,
**caractérisé en ce**
- **que** le moteur à combustion interne (2) présente un circuit intermédiaire (18) dans lequel un milieu intermédiaire circule et dans lequel le premier évaporateur (15) et le premier refroidisseur d'air de suralimentation (17) sont intégrés de manière à transmettre de la chaleur,
- **que** le circuit intermédiaire (18) est séparé fluidiquement du circuit de réfrigération (9), le circuit de refroidissement d'air de suralimentation (22) et l'installation d'air frais (3).

2. Moteur à combustion interne (2) selon la revendication 1,
**caractérisé en ce**
- **que** le circuit de réfrigération (9) présente une première branche (13) et une seconde branche (14) qui divergent sur un point de dérivation commun (12) agencé en aval d'un condensateur (11) du circuit de réfrigération (9) et sont réunies en un point d'embouchure commun (47) agencé en amont du condensateur (11),
- **que** le premier évaporateur (15) est agencé dans la première branche (13),
- **qu'**un second évaporateur (16) est agencé dans la seconde branche (14).

3. Moteur à combustion interne selon la revendication 2,
**caractérisé par**
un dispositif de soupape de circuit de réfrigération (20) pour la répartition de l'écoulement du moyen de réfrigération entre la première branche (13) et la seconde branche (14).

4. Moteur à combustion interne selon la revendication 2 ou 3,
**caractérisé en ce**
- **que** le condensateur (11) et le refroidisseur de moyen de refroidissement (26) sont agencés de manière contiguë et peuvent être traversés et/ou contournés par un écoulement d'air de refroidissement commun (37) l'un après l'autre.

5. Moteur à combustion interne selon l'une quelconque des revendications 1 à 4,
**caractérisé en ce**
**que** l'installation d'air frais (3) présente une dérivation (27) contournant le premier refroidisseur d'air de suralimentation (17).

6. Moteur à combustion interne selon la revendication 5,
**caractérisé par**
un dispositif de soupape d'installation d'air frais (28) pour la commande de l'écoulement de l'air de suralimentation passant par la dérivation (27) et/ou par le premier refroidisseur d'air de suralimentation (17).

7. Moteur à combustion interne selon l'une quelconque des revendications 1 à 6, **caractérisé en ce**
**que** le circuit intermédiaire (18) présente un dispositif de transport (19), en particulier un compresseur de circuit intermédiaire (24) pour l'entraînement du milieu intermédiaire.

8. Moteur à combustion interne selon l'une quelconque des revendications 1 à 7,
**caractérisé en ce**
**que** le moteur à combustion interne (2) est relié pour l'entraînement du compresseur de circuit de réfrigération (10) par une liaison d'entraînement (35) au compresseur de circuit de réfrigération (10).

9. Procédé pour le fonctionnement d'un véhicule (1) avec un moteur à combustion interne suralimenté (2) selon l'une quelconque des revendications 1 à 8, dans lequel
- le véhicule (1) est entraîné par le moteur à combustion interne (2),
- le compresseur de circuit de réfrigération (10) est actionné dans une phase de poussée du véhicule (1) au moyen d'une puissance de poussée du véhicule (1).

10. Procédé selon la revendication 9,
**caractérisé en ce**
**qu'**une puissance de compresseur du compresseur de circuit de réfrigération (10) est augmentée dans une phase de poussée du véhicule (1).

11. Procédé selon la revendication 9 ou 10,
**caractérisé en ce**
**que** la puissance du compresseur de circuit de réfrigération (10) est réduite dans une phase d'accélération du véhicule.

12. Procédé selon la revendication 11,
**caractérisé en ce**
**que** le compresseur de circuit de réfrigération (10) est arrêté dans une phase d'accélération du véhicule (1).

13. Véhicule (1) avec un moteur à combustion interne suralimenté (2) selon l'une quelconque des revendications 1 à 8.

14. Véhicule selon la revendication 13,
**caractérisé en ce**
**que** le véhicule (1) présente un dispositif de commande (40) qui est configuré de manière à actionner le véhicule (1) selon un procédé selon l'une quelconque des revendications 9 à 12.
